# EUROPÄISCHE PATENTSCHRIFT

(11) **EP 1 256 415 B1**
(45) Veröffentlichungstag und Bekanntmachung des Hinweises auf die Patenterteilung: **14.09.2005**
(21) Anmeldenummer: 01121684.3
(22) Anmeldetag: 14.09.2001
(51) Int. Cl.: B23Q 7/00, B23Q 7/05, B65G 35/08

(54) **Vorrichtung zur Rückführung von Werkstücken**
Device for recirculating machined parts
Dispositif pour ramener des pièces usinées à la station de départ

(30) Priorität: 09.05.2001 DE 10122377
(43) Veröffentlichungstag der Anmeldung: 13.11.2002
(73) Patentinhaber: Ligmatech Automationssysteme GmbH, 09638 Lichtenberg (DE)
(72) Erfinder: Tönnigs, Bodo, 09638 Lichtenberg (DE); Kaden, Dietmar, 09619 Mulda (DE)
(74) Vertreter: HOFFMANN EITLE

(56) Entgegenhaltungen:
- EP-A- 0 608 171
- EP-A- 0 999 152
- EP-A- 1 034 879
- DE-A- 2 438 960
- DE-A- 3 539 723
- DE-A- 4 024 639
- DE-A- 19 534 954
- DE-U- 9 307 220
- DE-U- 20 016 186
- GB-A- 886 682
- US-A- 4 987 992
- PATENT ABSTRACTS OF JAPAN vol. 009, no. 051 (M-361), 6. März 1985 (1985-03-06) & JP 59 187435 A (SHINMEI KOGYO KK;OTHERS: 01), 24. Oktober 1984 (1984-10-24)

## Beschreibung

### Technisches Gebiet

Die Erfindung betrifft eine Vorrichtung zur Rückführung von bearbeiteten Werkstücken von der Ausgabeseite einer ersten Bearbeitungseinheit zu der Beschickungsseite der ersten oder einer weiteren Bearbeitungseinheit. Die Vorrichtung weist eine Übernahmeeinrichtung zur Übernahme der bearbeiteten Werkstücke an der Ausgabeseite der ersten Bearbeitungseinheit auf, eine Hubeinrichtung zum Anheben der von der Übernahmeeinheit angelieferten Werkstücke in eine oberhalb der Übernahmeeinheit liegende Rückführposition, und eine Rücklaufeinrichtung zum Transportieren der von der Hubeinrichtung angelieferten Werkstücke zurück zur Beschickungsseite der ersten oder der weiteren Bearbeitungseinheit.

Bei der Bearbeitung von Werkstücken, vorzugsweise plattenförmigen, streifenförmigen oder leistenförmigen Werkstücken, die insbesondere aus Holz, Holz ähnlichen Werkstoffen oder Kunststoffen aufgebaut sind, ist es oftmals notwendig, die Bearbeitung eines Werkstücks an einer Bearbeitungseinheit mehrmals durchzuführen. Unter einer Bearbeitungseinheit werden hier vornehmlich eine oder mehrere Bearbeitungsstationen oder sogenannte Durchlaufmaschinen verstanden. Bei Durchlaufmaschinen werden jeweils an einer Seitenkante des Werkstücks verschiedene Bearbeitungsvorgänge in einem Durchlauf durchgeführt.

Eine derartige Bearbeitung der Seitenkanten eines Werkstücks ist z.B. bei Möbelteilen oder Küchenfronten nötig, die an allen vier Seitenkanten bzw. Randbereichen bearbeitet werden müssen, um beispielsweise eine Kante aufzuleimen und zu bearbeiten. Da diese Maschinen meist eine größere Längserstreckung aufweisen, ist es erforderlich, die Werkstücke nach einem oder mehreren Bearbeitungsschritten zur Beschickungsseite zurückzuführen.

### Stand der Technik

Die einfachste Möglichkeit zur Rückführung der Werkstücke besteht darin, an beiden Enden der Bearbeitungseinheit jeweils einen Bediener abzustellen, von denen einer die Werkstücke auf der Beschickungsseite einlegt und der andere die bearbeiteten Werkstücke an der Ausgabeseite der Bearbeitungseinheit abnimmt und per Hand, einzeln oder in Stapeln, zur Beschickungsseite zurücktransportiert. Ein solches Vorgehen ist jedoch zeit- und kostenintensiv und verhindert die optimale Auslastung der Bearbeitungseinheit.

Es sind daher verschiedene Rückführvorrichtungen entwickelt worden.

In einer bekannten Ausgestaltung werden die Werkstücke am Ende der Bearbeitungseinheit auf eine im Halbkreis geführte Laufrollenbahn gebracht, die die Werkstücke in der horizontalen Ebene um 180° umdreht. An die Laufrollenbahn schließt sich eine Rücklaufbahn an, welche parallel zur Bearbeitungsbahn verläuft und die Werkstücke zur Beschickungsseite zurücktransportiert.

Anstelle der im Halbkreis geführten Laufrollenbahn ist gemäß dem Deutschen Gebrauchsmuster G 200 16 186 eine Versetzeinrichtung zwischen der Bearbeitungs- und der daneben verlaufenden Rücklaufbahn vorgesehen: die Werkstücke werden nach der Bearbeitung in der Bearbeitungseinheit an der Ausgabeseite von angetriebenen Walzen übernommen, und Auflageleisten der Versetzeinrichtung werden zwischen diesen Walzen von unten nach oben hindurchgeführt und heben das Werkstück an. Die Auflageleisten werden dann zusammen mit dem Werkstück seitlich versetzt und legen das Werkstück auf der Rücklaufbahn ab.

Solche Rückführvorrichtungen, bei denen die Rücklaufbahn im wesentlichen auf gleicher Höhe wie die Bearbeitungsbahn und neben der Bearbeitungsbahn verläuft, erfordern zum einen viel Platz seitlich der Bearbeitungsmaschine. Zum anderen verschmutzt die Rücklaufbahn sehr stark, da gerade in der Holzbearbeitungsindustrie ständig feinste Späne oder dergleichen bei der Bearbeitung anfallen. Somit erfordert die Rücklaufbahn einen hohen Wartungsaufwand, was mit hohen Kosten verbunden ist.

Um diese Probleme zu lösen, ist in der Rückführvorrichtung gemäß dem Deutschen Gebrauchsmuster G 93 07 220.1, dessen Offenbarung hiermit vollständig zum Gegenstand der vorliegenden Anmeldung gemacht wird, die Rücklaufbahn oberhalb der Bearbeitungsbahn angeordnet. An die Bearbeitungsbahn schließt sich eine Übernahmeeinrichtung für das Werkstück an, und zwischen der Übernahmeeinrichtung und der Rücklaufbahn ist eine Hubeinrichtung zum Anheben der Werkstücke in eine oberhalb der Ausgabehöhe liegende Rückführposition angeordnet. Die Hubeinrichtung weist dabei einen Hubtisch auf, der beispielsweise über ein Scherengitter, das über Hydraulik- oder Pneumatikzylinder angetrieben ist, vertikal verstellbar ist. Die Rücklaufbahn ist hier vorzugsweise zwischen der Rückführposition und der Beschickungsseite gegenüber der Horizontalen so geneigt, dass die bearbeiteten Werkstücke unter Ausnutzung der Schwerkraft zur Beschickungsseite zurücktransportiert werden.

Diese Lösung bietet den Vorteil, dass der bisher ungenutzte Raum oberhalb der Bearbeitungsanordnung für die Rückführung der Werkstücke genutzt wird. Der Platzbedarf für die Rückführeinrichtung wird stark reduziert, und eine dichte Stellung der in einer Fertigungshalle stehenden Bearbeitungseinheiten ist möglich. Außerdem kann die Rückführeinrichtung an bereits bestehende Bearbeitungsmaschinen angebaut werden. Da die Rücklaufbahn oberhalb der Bearbeitungsbahn verläuft, setzen sich Späne, die während der Bearbeitung anfallen, nicht mehr so leicht an der Rücklaufbahn ab, so dass auch der Wartungsaufwand für die Rücklaufbahn sinkt.

Wenn während der Bearbeitung ein hoher Durchsatz erzielt werden soll, gestalten sich die Steuerung der Rückführvorrichtung sowie die notwendige Synchronisierung zwischen Bearbeitungseinheit und Rückführvorrichtung jedoch relativ aufwendig. Darüber hinaus ist der mögliche Durchsatz dadurch begrenzt, dass der Hubtisch sich stets vollständig in seine Ausgangslage zurückbewegen muss, bevor er das nächste anzuhebende Werkstück aufnehmen kann.

DE 35 39 723 A1 offenbart eine Rückführvorrichtung gemäß dem Oberbegriff des Patentanspruchs 1.

### Darstellung der Erfindung

Der vorliegenden Erfindung liegt die Aufgabe zugrunde, die bekannte Rückführvorrichtung mit oberhalb der Bearbeitungsbahn liegender Rücklaufbahn und Hubtisch dahingehend zu verbessern, dass die Taktleistung ohne großen Steuerungsaufwand erhöht und die Hubbewegung harmonisiert werden kann.

Dieses technische Problem wird gelöst durch eine Vorrichtung zur Rückführung von bearbeiteten Werkstücken gemäß dem Patentanspruch 1.

Der Hubtisch ist demnach rechenartig ausgestaltet, wobei die Auflageelemente des Hubtisches als Zinken des Rechens angeordnet sind. Da der Übernahmetisch ebenfalls voneinander beabstandete Auflageelemente aufweist, kann der Hubtisch aufwärts durch den Übernahmetisch hindurch geführt werden und bei seiner Aufwärtsbewegung ein Werkstück von dem Übernahmetisch entfernen. Sobald der Hubtisch das Werkstück von dem Übernahmetisch entfernt hat, kann bereits das nächste Werkstück auf den Übernahmetisch auflaufen und befindet sich dann bereits in der Position, in der es von dem Hubtisch angehoben werden kann. Im Gegensatz dazu kann das Werkstück in den bekannten Vorrichtungen erst dann in diese Position gebracht werden, wenn der Hubtisch in seine Ausgangslage zurückgekehrt ist.

Die Hubeinrichtung bewegt die Auflageelemente des Hubtisches demnach zwischen den Auflageelementen des feststehenden Übernahmetisches hindurch nach oben, so dass der Hubtisch ein auf dem Übernahmetisch befindliches Werkstück nach oben befördert, bis eine Rückführposition erreicht ist. An dieser Rückführposition wird das Werkstück dann von dem Hubtisch an die Rücklaufeinrichtung übergeben.

Nach der Übergabe des Werkstücks vom Hubtisch an die Rückführeinrichtung wird der Hubtisch in einer waagerechten Bewegung aus dem Bereich oberhalb des Übernahmetisches heraus zurück geführt, bewegt sich anschließend abwärts und wieder nach vorn, so dass seine Auflageelemente wiederum zwischen die Auflageelemente des Übernahmetisches greifen und bei der anschließenden Aufwärtsbewegung das nächste Werkstück von dem Übernahmetisch entfernen können.

Die Bewegung des Hubtisches ist demnach eine Umlaufbewegung, in der sich der Hubtisch in einem Umlauf von dem Übernahmetisch aus aufwärts, zurück, abwärts und wieder nach vorn zum Übernahmetisch bewegt.

Vorteilhafte Weiterbildungen der erfindungsgemäßen Rückführvorrichtung sind in den weiteren Ansprüchen beschrieben.

Die Umlaufbewegung des Hubtisches kann aus einer oszillierenden Auf- und Abbewegung (Hubbewegung) sowie einer überlagerten waagerechten oszillierenden Bewegung zusammengesetzt sein.

Dabei handelt es sich bevorzugt um eine zweidimensionale Umlaufbewegung in einer Ebene senkrecht zur Förderrichtung der Werkstücke. Der Hubtisch wird dann anschließend an den eigentlichen Hubvorgang in einem Bereich hinter der Bearbeitungsbahn der Bearbeitungseinheit zurück, abwärts und wieder nach vorn geführt, so dass sich die Längsausdehnung der Bearbeitungsbahn nicht vergrößert.

Der Übernahmetisch ist vorzugsweise ein feststehender Übernahmetisch, durch dessen Auflageelemente der Hubtisch hindurch geführt werden kann.

Wie oben beschrieben, kann die zweidimensionale Bewegung des Hubtisches aus einer oszillierenden Auf- und Abbewegung und einer oszillierenden waagerechten Bewegung zusammengesetzt sein. In diesem Fall sind vorzugsweise getrennte Antriebseinheiten für diese beiden oszillierenden Bewegungen vorgesehen, und zwar eine erste Antriebseinheit zur Erzeugung der oszillierenden Auf- und Abbewegung und eine zweite Antriebseinheit zur Erzeugung der oszillierenden waagerechten Bewegung.

In einer vorteilhaften Ausgestaltung der erfindungsgemäßen Vorrichtung weist zumindest eine Antriebseinheit einen Kurbeltrieb auf. Vorzugsweise werden dabei sowohl die Auf- und Abbewegung als auch die waagerechte Bewegung des Hubtisches durch jeweils einen Kurbeltrieb erzeugt.

Dadurch ist ein vereinfachter Antrieb des Hubtisches unter Verwendung von herkömmlichen Antriebsmotoren möglich. Die Kurbeltriebe sorgen für eine Umwandlung von Drehbewegungen in eine translatorische Auf-/Ab- bzw. waagerechte Bewegung.

Wenn die Hubbewegung des Hubtisches mittels des Kurbeltriebs erzeugt wird, kommt es in vorteilhafter Art und Weise zu einem sanften Anlauf des Hubtisches, wodurch verhindert wird, dass sich die auf dem Hubtisch befindlichen Werkstücke aufgrund ihrer Trägheit auf dem Hubtisch verachieben oder sogar von ihm herunterfallen. Anschließend an diesen sanften Anlauf wird die Hubbewegung beschleunigt und somit eine hohe Transportgeschwindigkeit der Werkstücke erreicht, um eine ausreichend hohe Taktleistung der Rückführvorrichtung zu erhalten. Daraufhin werden die Werkstücke am Ende der Hubbewegung sanft abgebremst, so dass sie sicher an die Rücklaufeinrichtung übergeben werden können.

Wenn die waagerechte Bewegung des Hubtisches ebenfalls durch einen Kurbeltrieb erzeugt wird, kommt es zu einem ähnlich vorteilhaften Ablauf dieser waagerechten Bewegung.

Der Kurbeltrieb gewährleistet somit ein sanftes Anfahren mit einer darauf folgenden hohen Transportgeschwindigkeit und einer anschließenden sanften Abbremsung der auf dem Hubtisch befindlichen Werkstücke, ohne dass eine aufwändige Steuerung elektrischer, pneumatischer oder hydraulischer Art erforderlich wäre. Folglich wird durch den Kurbeltrieb mit einfachen Mitteln ein besonders vorteilhaftes Transportprofil für die Werkstücke ermöglicht, wobei der Verlauf der Geschwindigkeit der Werkstücke durch die Umwandlung einer Rotations- in eine translatorische Bewegung einem Teilbereich der Sinus- bzw. Cosinusfunktion entspricht.

Gemäß einer vorteilhaften Ausführungsform weist der Kurbeltrieb eine angetriebene Drehachse auf, an der eine Kurbel drehbar angebracht ist. Das freie Ende der Kurbel ist dann vorzugsweise in einer Fahrschiene geführt, die mit zumindest einem Hubtisch gekoppelt ist, so dass sich die oszillierende Bewegung der Fahrschiene auf den Hubtisch überträgt.

Vorzugsweise weist die Fahrschiene gehärtete Leisten zur Aufnahme des freien Endes der Kurbel auf, welche insbesondere eingeklebt sind. Dadurch vermindert sich der Abrieb zwischen den bewegten Teilen, um die Lebensdauer der Vorrichtung zu erhöhen. Das Einkleben erleichtert die Montage der Leisten in die Fahrschiene.

Vorteilhafterweise trägt das freie Ende der Kurbel eine Rolle, die in Längsrichtung in der Fahrschiene verfahrbar ist. Dadurch vermindert sich die Reibung zwischen dem Kurbelende und der Fahrschiene, so dass sich der Wirkungsgrad der Vorrichtung erhöht.

Anstelle des Kurbeltriebs sind jedoch auch andere Antriebsarten wie beispielsweise hydraulische oder pneumatische Antriebe zur Erzeugung der Bewegung des Hubtisches denkbar.

Während diese Antriebseinheiten grundsätzlich unabhängig voneinander angesteuert werden können, so dass die Auf- und Abbewegung des Hubtisches grundsätzlich unabhängig von seiner waagerechten Bewegung erfolgen kann, ist es vorteilhaft, die beiden Antriebseinheiten so zu koppeln, dass der Hubtisch die Teilbewegungen des oben beschriebenen Umlaufs "aufwärts - zurück - abwärts - nach vorn" nacheinander ausführt: Wenn sich ein Werkstück auf dem Übernahmetisch befindet, erzeugt zunächst die erste Antriebseinheit die Aufwärtsbewegung, anschließend erzeugt die zweite Antriebseinheit die waagerechte Bewegung zurück, und dann folgen die durch die erste Antriebseinheit erzeugte Abwärtsbewegung und die durch die zweite Antriebseinheit erzeugte Bewegung nach vorn. Die beiden Antriebseinheiten arbeiten daher im Wechsel miteinander.

Falls beide Antriebseinheiten Kurbeltriebe aufweisen, führen die Kurbeln der Kurbeltriebe dann abwechselnd halbe Umdrehungen aus.

Zur Steuerung und Synchronisierung der beiden Antriebseinheiten ist vorzugsweise eine übergeordnete Steuerung vorgesehen.

Dabei ist der Übernahmetisch bevorzugt mit einem Sensor ausgestattet, der ein Signal an die übergeordnete Steuerung übermittelt, wenn sich ein Werkstück auf dem Übernahmetisch befindet. Die übergeordnete Steuerung steuert dann die erste Antriebseinheit an, so dass diese die Aufwärtsbewegung des Hubtisches verursacht. Die Kopplung der beiden Antriebseinheiten erfolgt dann vorzugsweise elektronisch mittels Endlagensensoren: Wenn die Aufwärtsbewegung des Hubtisches beendet ist, übermittelt ein geeignet angebrachter Endlagensensor ein Signal an die übergeordnete Steuerung, die dann die erste Antriebseinheit abschaltet und die zweite Antriebseinheit ansteuert, welche die waagerechte Bewegung des Hubtisches zurück erzeugt. Zur Erfassung der Endlagen des Hubtisches nach den Bewegungen "zurück", "ab" und "vor" sind ebenfalls Endlagensensoren geeignet angebracht.

Um die von den Antriebseinheiten erzeugten Bewegungen auf den Hubtisch zu übertragen, sind Mittel zur Kopplung des Hubtisches mit jeder Antriebseinheit vorgesehen. Dabei handelt es sich insbesondere um Schlitten, die jeweils von einer Antriebseinheit hin und her bewegt werden und dabei mit dem Hubtisch verbunden sind. Die Schlitten sind dabei in ihren Bewegungen vorzugsweise in Führungsschienen geführt.

Die Führungsschienen der zweiten Antriebseinheit sind dabei vorzugsweise waagerecht angeordnet. Die Führungsschienen der ersten Antriebseinheit zur Erzeugung der Hubbewegung können vertikal oder gegenüber der Vertikalen geneigt angeordnet sein.

Falls die Antriebseinheiten Kurbeltriebe aufweisen, ist dann vorzugsweise zumindest ein Schlitten einer Antriebseinheit mit der Fahrschiene des zugehörigen Kurbeltriebs verbunden. Die oszillierende Bewegung der Fahrschiene überträgt sich dann auf den Schlitten und auf den damit verbundenen Hubtisch.

In der Ausgestaltung mit einer ersten Antriebseinheit für die Auf- und Abbewegung und einer zweiten Antriebseinheit für die waagerechte Bewegung weist jede der beiden Antriebseinheiten dann jeweils zumindest einen Schlitten für jeden vorhandenen Hubtisch auf. An den Schlitten sind dabei vorzugsweise Mitnehmer ausgebildet, und die Hubtische sind mit einem Freiheitsgrad an diesem Mitnehmer gelagert. In dieser Art und Weise überträgt sich stets die oszillierende Bewegung des Schlittens, d.h. die Auf- und Abbewegung der Schlitten der ersten Antriebseinheit bzw. die waagerechte Bewegung der Schlitten der zweiten Antriebseinheit, auf den Hubtisch. Während seiner Auf- und Abbewegung kann sich der Hubtisch an dem Mitnehmer des Schlittens der zweiten Antriebseinheit entlang bewegen; während der waagerechten Bewegung gleitet er an dem Mitnehmer des Schlittens der ersten Antriebseinheit entlang.

Der Mitnehmer muss dabei so ausgestaltet sein, dass die jeweilige oszillierende Bewegung auf den Hubtisch übertragen werden kann, unabhängig davon, an welcher Stelle des Zyklus' sich der Hubtisch gerade befindet. Insbesondere muss also die waagerechte Bewegung des Schlittens der zweiten Antriebseinheit auf den Hubtisch übertragen werden können, unabhängig davon, ob sich der Hubtisch gerade auf der Rückführhöhe oder auf der Höhe des Übernahmetisches befindet. In gleicher Weise muss die Auf- bzw. Abbewegung des Schlittens der ersten Antriebseinheit auf den Hubtisch übertragen werden können, unabhängig davon, ob sich der Hubtisch gerade vorn mit einem Werkstück nach oben oder im hinteren Bereich leer nach unten bewegt.

In einer vorteilhaften Ausgestaltung der Erfindung sind die Mitnehmer daher als Stangen ausgebildet, und an den Hubtischen sind Rollen angebracht, über die die Hubtische an den Mitnehmern gelagert sind. Die Mitnehmer können auch als Schienen ausgebildet sein. In diesem Fall ist an jedem Hubtisch ein entsprechendes Führungselement vorgesehen, das an der Schiene entlang laufen kann.

Die Taktleistung der erfindungsgemäßen Rückführvorrichtung ist wesentlich erhöht, da zwei Hubtische vorgesehen sind, die die zweidimensionale zyklische Bewegung zwischen Übernahmetisch und Rückführposition gleichzeitig ausführen. Die beiden Hubtische haben in ihren Bewegungen dabei vorzugsweise einen solchen Abstand, dass während einer Aufwärtsbewegung des einen Hubtisches stets eine Abwärtsbewegung des anderen Hubtisches erfolgt.

In dieser Ausgestaltung der erfindungsgemäßen Vorrichtung muss gewährleistet sein, dass die beiden Hubtische sich in ihren Bewegungen nicht behindern. Insbesondere muss es möglich sein, einen Hubtisch von der oberen Rückführposition aus waagerecht zurück zu führen und den anderen Hubtisch gleichzeitig auf der Ausgabehöhe nach vorn zum Übernahmetisch, ohne dass die beiden Hubtische oder ihre Führungen miteinander kollidieren.

Unter diesem Gesichtspunkt ist in der erfindungsgemäßen Vorrichtung ein Hubtisch einteilig, der zweite dagegen zweiteilig ausgestaltet. Daher kann die Kopplung des einteiligen Hubtisches mit den Antriebseinheiten auf halber Länge, d.h. in der Mitte des einteiligen Hubtisches vorgesehen sein, während die beiden Teilstücke des zweiteiligen Hubtisches einzeln mit den Antriebseinheiten gekoppelt sind, wobei sich die Kopplungen außen an den beiden Teilstücken befinden. Insbesondere ist daher der einteilige Hubtisch über einen Schlitten mit der ersten Antriebseinheit und über einen Schlitten mit der zweiten Antriebseinheit gekoppelt, wohingegen für die Kopplung des zweiteiligen Hubtisches jeweils zwei Schlitten für die erste und zwei Schlitten für die zweite Antriebseinheit vorgesehen sind, da jedes Teilstück des zweiteiligen Hubtisches separat mit der ersten und der zweiten Antriebseinheit gekoppelt wird.

Diese Ausgestaltung bietet den Vorteil, dass die beiden Teilstücke des zweiteiligen Hubtisches sich bei der gleichzeitigen waagerechten Bewegung der beiden Hubtische, in der sich ein Hubtisch zurück und der andere nach vorn bewegt, seitlich an der Führung oder den Schlitten des ersten Hubtisches vorbei bewegen können. Anders herum betrachtet bewegt sich der Schlitten des einteiligen Hubtisches bei der waagerechten Bewegung zwischen den beiden Teilstücken des zweiteiligen Hubtisches hindurch.

Die Bewegungen der beiden Hubtische sind miteinander synchronisiert. Dies kann beispielsweise dadurch erfolgen, dass ein Schlitten einer Antriebseinheit direkt mit der Fahrschiene des Kurbeltriebs verbunden ist und dass die übrigen Schlitten der Antriebseinheit beispielsweise über Zahnriemen und eine Gleichlaufwelle mit dem mit der Fahrschiene verbundenen Schlitten gekoppelt sind, so dass sich die oszillierende Bewegung von diesem Schlitten auf die anderen Schlitten überträgt. Die entsprechenden Schlitten sind vorzugsweise um eine halbe Umfangslänge der Zahnriemen gegeneinander versetzt an den Zahnriemen verklemmt, um sicherzustellen, dass während einer Aufwärtsbewegung des einen Hubtisches stets eine Abwärtsbewegung des anderen Hubtisches und während einer waagerechten Rückbewegung eines Hubtisches stets eine waagerechte Vorwärtsbewegung des anderen stattfindet.

Die Auflageelemente des Hubtisches und des Übernahmetisches sind vorzugsweise drehbare Transportrollen, deren Drehachsen im wesentlichen senkrecht zur Transportrichtung des Werkstücks liegen. Dabei können die Transportrollen angetrieben sein, um insbesondere auch nach dem Hubvorgang die Übergabe des Werkstücks vom Hubtisch an die Rücklaufeinrichtung anzustoßen.

### Kurze Beschreibung der Zeichnungen

Im folgenden wird anhand von Zeichnungen eine bevorzugte Ausführungsform der Erfindung beschrieben. Im einzelnen zeigt:
Fig. 1 eine erste Ausführungsform einer Rückführeinrichtung in vier verschiedenen Betriebsstellungen,
Fig. 2 eine Detailansicht eines Hubtisches einer Rückführeinrichtung samt seiner Kopplung zu einer Antriebseinheit,
Fig. 3 zwei Hubtische einer erfindungsgemäßen Rückführeinrichtung in vier verschiedenen Betriebsstellungen,
Fig. 4 eine schematische Draufsicht auf eine erfindungsgemäße Vorrichtung in einer zweiten Ausführungsform,
Fig. 5 eine schematische Ansicht zweier Hubtische einer erfindungsgemäßen Vorrichtung,
Fig. 6 eine Antriebseinrichtung einer erfindungsgemäßen Vorrichtung zur Erzeugung einer Auf- und Ab-Bewegung zweier Hubtische,
Fig. 7 eine Antriebseinrichtung einer erfindungsgemäßen Vorrichtung zur Erzeugung einer waagerechten Bewegung zweier Hubtische, und
Fig. 8 eine Detailansicht eines Kurbeltriebs einer erfindungsgemäßen Vorrichtung.

### Ausführliche Beschreibung einer bevorzugten Ausführungsform

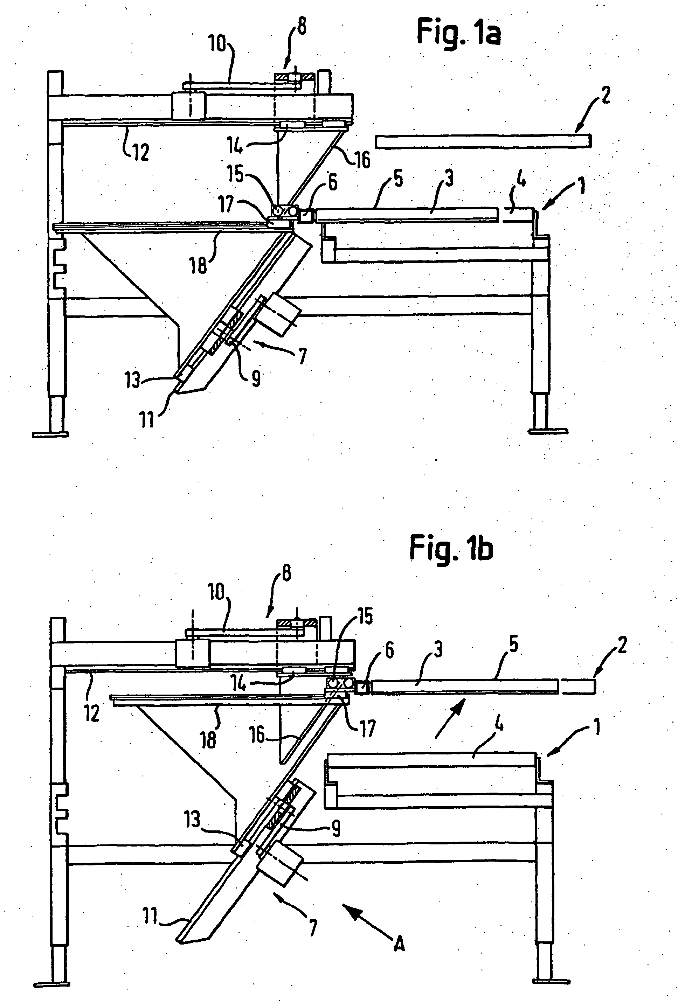

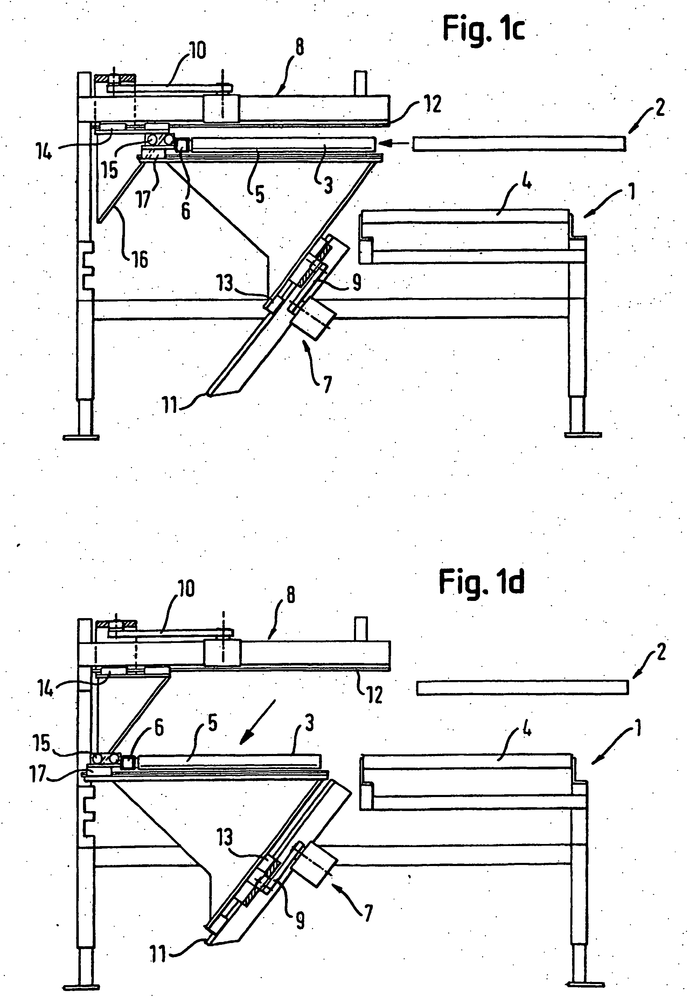

Fig. 1 zeigt eine Rückführeinrichtung von bearbeiteten Werkstücken von der Ausgabeseite zu der Beschickungsseite einer Bearbeitungseinheit. Die folgende Beschreibung dieser Rückführeinrichtung erleichtert das Verständnis der anschließenden Beschreibung einer erfindungsgemäßen Rückführvorrichtung.

Schematisch dargestellt ist eine Übernahmeeinrichtung mit einem Übernahmetisch 1, auf den in einer (nicht dargestellten) Bearbeitungseinheit bearbeitete Werkstücke auflaufen. Das Auflaufen der bearbeiteten Werkstücke auf den Übernahmetisch 1 erfolgt dabei in die Zeichenebene in Fig. 1 hinein. Der Übernahmetisch 1 weist mehrere voneinander beabstandete Transportwalzen 4 auf, deren Drehachsen senkrecht zur Förderrichtung der Werkstücke liegen und von denen in den Zeichnungen jeweils nur eine sichtbar ist.

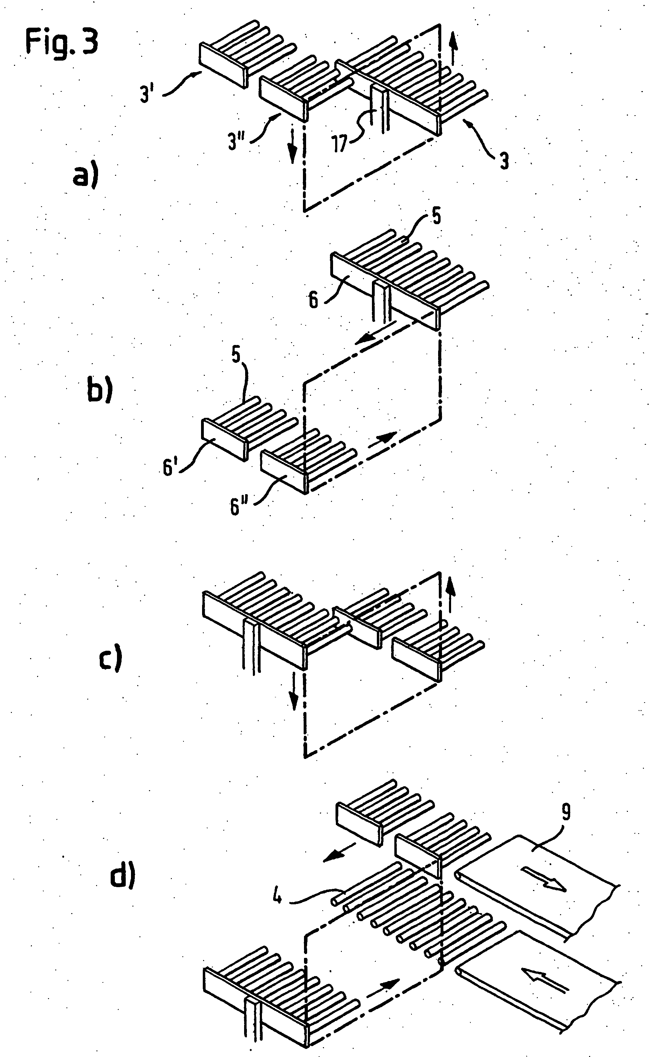

Eine Hubeinrichtung mit einem Hubtisch 3 dient zum Anheben der Werkstücke von dem Übernahmetisch 1 zu einer Rückführeinrichtung 2, von der aus die Werkstücke zur Beschickungsseite der Bearbeitungseinheit zurücklaufen. Das Rücklaufen der Werkstücke erfolgt dabei aus der Zeichenebene in Fig. 1 heraus. Der Hubtisch 3 weist ebenfalls Transportwalzen 5 auf, deren Drehachsen senkrecht zur Förderrichtung der Werkstücke in der Bearbeitungseinheit liegen. Die Transportwalzen 5 des Hubtisches 3 sind dabei einseitig an einem Trägerelement 6 befestigt, so dass eine rechenartige Anordnung aus Trägerelement 6 und Transportwalzen 5 entsteht (vgl. auch Fig. 3). Auf diese Weise ist es möglich, dass die Transportwalzen 5 des Hubtisches 3 zwischen die Transportwalzen 4 des Übernahmetisches greifen.

Die entsprechende Betriebsstellung, in der die Transportwalzen 5 des Hubtisches 3 sich zwischen den Transportwalzen 4 des Übernahmetisches 1 befinden, ist in Fig. 1a dargestellt. In dieser Stellung kann ein Werkstück, das sich auf dem Übernahmetisch 1 befindet, von den Transportwalzen 5 des Hubtisches 3 ergriffen und nach oben befördert werden, und zwar bis in die in Fig. 1b dargestellte Betriebsstellung, in der sich der Hubtisch 3 auf der Höhe der Rücklaufeinrichtung 2 befindet. Hier wird das Werkstück dann von dem Hubtisch 3 an die Rücklaufeinrichtung 2 übergeben.

Sobald sich der Hubtisch 3 aus der in Fig. 1a gezeigten Grundstellung ausreichend weit nach oben in Richtung der in Fig. 1b gezeigten Stellung bewegt hat, kann bereits ein weiteres Werkstück auf den Übernahmetisch 1 auflaufen. So kann der Durchsatz der Rückführeinrichtung in vorteilhafter Weise erhöht werden. Um dieses nächste, auf dem Übernahmetisch 1 befindliche Werkstück wiederum mittels des Hubtisches 3 in die Rückführposition befördern zu können, muss der Hubtisch 3 nun aus der in Fig. 1b gezeigten oberen Position so in die in Fig. 1a gezeigte Grundstellung zurückgeführt werden, dass das nächste, bereits auf dem Übernahmetisch 1 befindliche Werkstück wiederum von unten mittels der Transportwalzen 5 des Hubtisches 3 ergriffen werden kann.

Dazu wird der Hubtisch 3 aus der Rückführstellung (Fig. 1b) zunächst in die in Fig. 1c gezeigte Stellung waagerecht zurück geführt, d.h. in den hinteren Bereich der Bearbeitungsmaschine (nach links in den Fig. 1 a-d). Von hier aus wird der Hubtisch 3 abwärts geführt bis in die in Fig. 1d gezeigte Stellung. Eine anschließenden waagerechten Bewegung nach vorn bringt den Hubtisch 3 wieder in die in Fig. 1a gezeigte Grundstellung, wobei die Transportwalzen 5 des Hubtisches 3 wiederum zwischen die Transportwalzen 4 des Übernahmetisches 1 geführt werden. Aus dieser Grundstellung heraus kann der Hubtisch 3 dann das nächste Werkstück zur Rücklaufeinrichtung 2 befördern.

Die Bewegung des Hubtisches 3 wird dabei vorzugsweise über eine (nicht dargestellte) übergeordnete Steuerung sowie über damit gekoppelte (nicht dargestellte) Sensoren koordiniert. Sobald ein Werkstück auf den Übernahmetisch 1 aufläuft, was von einem Sensor erfasst wird, und sich der Hubtisch 3 in der Grundstellung (Fig. 1a) befindet, wird die Hubbewegung des Hubtisches 3 in die Rückführstellung ausgeführt. Sobald der Hubtisch 3 die Rückführposition erreicht hat und das Werkstück an die Rücklaufeinrichtung 2 übergeben worden ist, was wiederum von Sensoren erfasst wird, wird die waagerechte Rückbewegung des Hubtisches 3 in die in Fig. 1c gezeigte Stellung ausgeführt. Wenn diese Bewegung beendet ist, was vorzugsweise von einem Endlagensensor erfasst wird, folgt die Bewegung nach unten in die in Fig. 1d gezeigte Stellung, nach deren Vollendung die waagerechte Bewegung nach vorn in die Grundstellung (Fig. 1a).

In der dargestellten beispielhaften Ausführungsform werden sowohl die Auf-/Ab-Bewegung des Hubtisches 3 als auch seine waagerechten Bewegungen mittels Kurbeltrieben 7 bzw. 8 erzeugt. Jeder der beiden Kurbeltriebe 7, 8 weist dabei eine Kurbel 9, 10 auf, deren freies Ende in einer Fahrschiene läuft, wodurch die Drehbewegung der Kurbel 9, 10 in eine translatorische Hin- und Her-Bewegung der Fahrschiene umgewandelt wird. Die Fahrschiene ist ihrerseits mit Schlitten 13, 14 gekoppelt, die zur Führung des Hubtisches dienen. Die Schlitten 13, 14 sind dabei mittels Führungsschienen 11, 12 geführt.

Die genaue Ausgestaltung und die Arbeitsweise der Kurbeltriebe 7, 8 und Schlitten 13, 14 wird ebenfalls aus den Fig. 1 a-d deutlich. Aus der in Fig. 1a gezeigten Grundstellung führt zunächst der erste Kurbeltrieb 7, der zur Erzeugung der Auf- und Abbewegung des Hubtisches 3 dient, eine halbe Umdrehung aus, so dass sich die Kurbel 9 des ersten Kurbeltriebs 7 aus der in Fig. 1a gezeigten unteren Stellung in die in Fig. 1b gezeigte obere Stellung bewegt und dabei die Fahrschiene und den damit gekoppelten Schlitten 13 aufwärts bewegt. Der Schlitten 13 bewegt so den Hubtisch 3 aufwärts, wobei die Kopplung zwischen Schlitten 13 und Hubtisch 3 über eine mit dem Schlitten 13 verbundene, waagerecht verlaufende Mitnehmerschiene 18 und ein Führungselement 17 realisiert ist, das auf der Mitnehmerschiene 18 gleitbar angeordnet ist. Während der Aufwärtsbewegung läuft der Hubtisch 3 außerdem über Rollen 15, die in der Nähe des Trägerelements 6 angebracht sind, an einem Mitnehmer 16 des zweiten Schlittens 14 entlang.

Dieser Mitnehmer 16 stellt gleichzeitig die Kopplung des Hubtisches 3 mit dem zweiten Schlitten 14 dar, die gewährleistet, dass die nun anschließende waagerechte Rückwärtsbewegung des zweiten Schlittens 14 auf den Hubtisch 3 übertragen wird. Diese waagerechte Bewegung von der in Fig. 1b gezeigten in die in Fig. 1c gezeigte Stellung wird mittels des zweiten Kurbeltriebs 8 erzeugt, dessen Kurbel 10 eine halbe Umdrehung ausführt und dabei die zugehörige Fahrschiene, den damit verbundenen zweiten Schlitten 14 und somit über den Mitnehmer 16 auch den Hubtisch 3 nach hinten befördert. Dabei bewegt sich der Hubtisch 3 mittels seines Führungselements 17 an der Mitnehmerschiene 18 entlang, die ihrerseits mit dem ersten Schlitten 13 verbunden ist. Der erste Kurbeltrieb 7 und somit auch der erste Schlitten 13 stehen währenddessen still.

In ähnlicher Weise folgen dann die Abwärtsbewegung des Hubtisches 3, erzeugt durch eine halbe Drehung des ersten Kurbeltriebs 7, sowie die waagerechte Bewegung nach vorn, erzeugt durch den zweiten Kurbeltrieb 8, bis die Grundstellung Fig. 1a wieder erreicht ist.

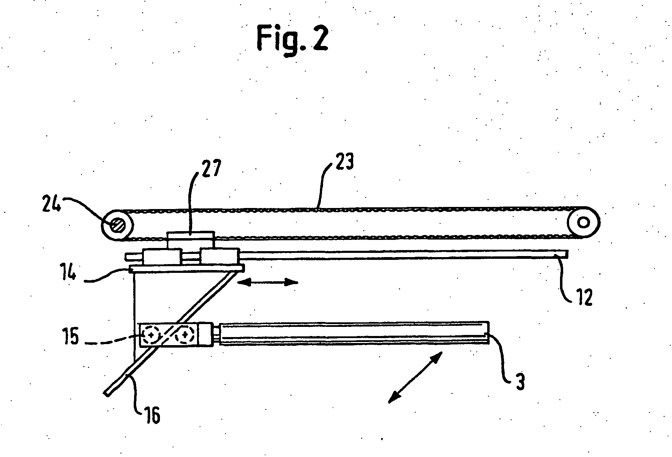

Fig. 2 zeigt noch einmal genauer einen Hubtisch 3 einer erfindungsgemäßen Anordnung, der über Rollen 15 an einem Mitnehmer 16 eines Schlittens 14 ablaufen kann. Der Schlitten 14 ist seinerseits mittels einer Führungsschiene 12 geführt. Der Schlitten 14 ist außerdem über eine Klemmung 27 mit einem Zahnriemen 23 verbunden. Auf den Zahnriemen 23 wird eine durch einen (in Fig. 2 nicht dargestellten) Kurbeltrieb erzeugte waagerechte Bewegung einer Fahrschiene übertragen, da der Zahnriemen 23 über eine Gleichlaufwelle 24 mit einem weiteren Zahnriemen gekoppelt ist, der seinerseits mit der Fahrschiene des Kurbeltriebs verbunden ist. Diese Kopplung der Schlitten und der Fahrschiene über Zahnriemen wird weiter unten im Zusammenhang mit einer weiteren Ausführungsform der Erfindung noch genauer erläutert.

Während die Fig. 1 a-d eine Ausführungsform mit nur einem Hubtisch zeigt, werden erfingdungsgemäß zwei Hubtische gleichzeitig verwendet, um den Durchsatz der Einrichtung zu erhöhen. Die beiden Hubtische sind geeignet ausgestaltet, um sich in ihren Bewegungen nicht zu behindern.

Fig. 3 zeigt hierzu schematisch zwei Hubtische 3, 3', 3", die gleichzeitig in einer erfindungsgemäßen Rückführeinrichtung eingesetzt werden. In Fig. 3d sind außerdem schematisch Walzen 4 einer Übernahmeeinrichtung sowie eine Rücklaufbahn 9 dargestellt, wobei die Förderrichtung der Werkstücke in der Bearbeitungseinheit bzw. auf der Rücklaufbahn 9 durch Pfeile gekennzeichnet ist.

Der erste Hubtisch 3 ist einteilig ausgestaltet; der zweite Hubtisch besteht dagegen aus zwei Teilstücken 3', 3".

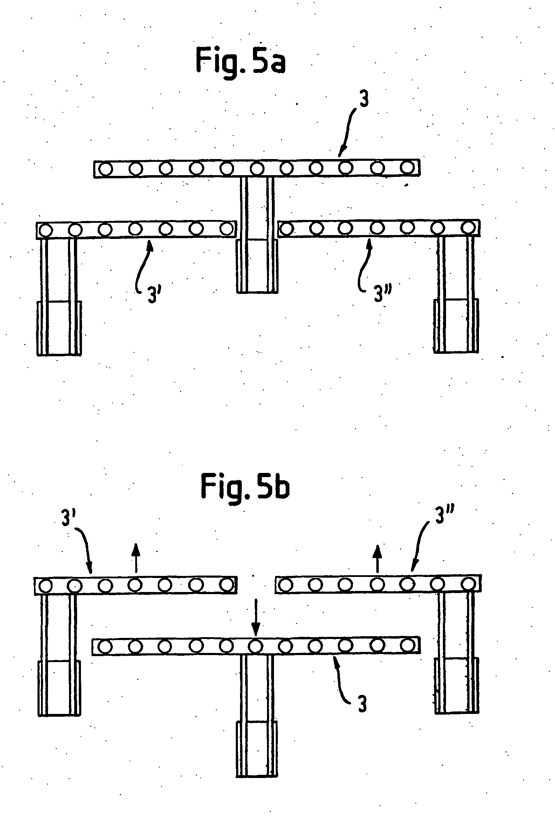

Die beiden Hubtische 3, 3', 3" werden nun von den Antriebseinheiten, insbesondere von zwei Kurbeltrieben, so bewegt, dass sie die Auf-/Ab-Bewegung und die waagerechte Bewegung jeweils gegenläufig ausführen: Wenn sich ein Hubtisch nach oben bewegt, bewegt sich der andere abwärts; wenn sich ein Hubtisch nach vorn bewegt, bewegt sich der andere zurück. Diese Abläufe werden aus Fig. 3a-d unmittelbar deutlich: Aus der in Fig. 3a gezeigten Grundstellung, in der sich der erste, einteilige Hubtisch 3 auf der Höhe des Übernahmetisches befindet, fährt dieser erste Hubtisch 3 aufwärts, während sich die beiden Teilstücke 3', 3" des zweiten Hubtisches abwärts bewegen, bis die in Fig. 3b gezeigte Stellung erreicht ist. Nun kann ein auf dem ersten Hubtisch 3 befindliches Werkstück an die Rücklaufeinrichtung 2 übergeben werden. Anschließend fährt der erste Hubtisch 3 in der oberen Stellung zurück, während sich die beiden Teilstücke 3', 3" des zweiten Hubtisches in der unteren Stellung nach vorn bewegen (Fig. 3c). Diese waagerechte Bewegung der beiden Hubtische relativ zueinander wird ermöglicht durch die besondere Ausgestaltung des zweiten Hubtisches in zwei Teilstücken 3', 3"; die beiden Teilstücke 3', 3" des zweiten Hubtisches laufen nämlich während der waagerechten Bewegung seitlich an einer Führung 19 des ersten Hubtisches 3 vorbei. Die Kopplung der beiden Teilstücke 3', 3" mit zugehörigen Schlitten erfolgt über (hier nicht dargestellte) Führungen, die vorzugsweise außen an den beiden Teilstücken 3', 3" angebracht sind, so dass sie die waagerechte Relativbewegung der Hubtische 3, 3', 3" nicht behindern (vgl. auch Fig. 5).

In ähnlicher Weise erfolgt dann wieder eine Auf- bzw. Abwärtsbewegung der Hubtische 3, 3', 3" in die in Fig. 3d gezeigte Stellung, während der nun der zweite Hubtisch 3', 3" ein Werkstück von dem Übernahmetisch zur Rückführeinrichtung 2 transportieren kann, und anschließend eine weitere waagerechte Bewegung zurück in die Grundstellung (Fig. 3a).

Dabei sind die beiden Hubtische 3, 3', 3" in ihren Bewegungen so miteinander gekoppelt, dass sich die Bewegung der Kurbel eines Kurbeltriebs auf die zugehörige Fahrschiene und von dort über Zahnriemen und eine Gleichlaufwelle auf alle Schlitten einer Antriebseinheit überträgt.

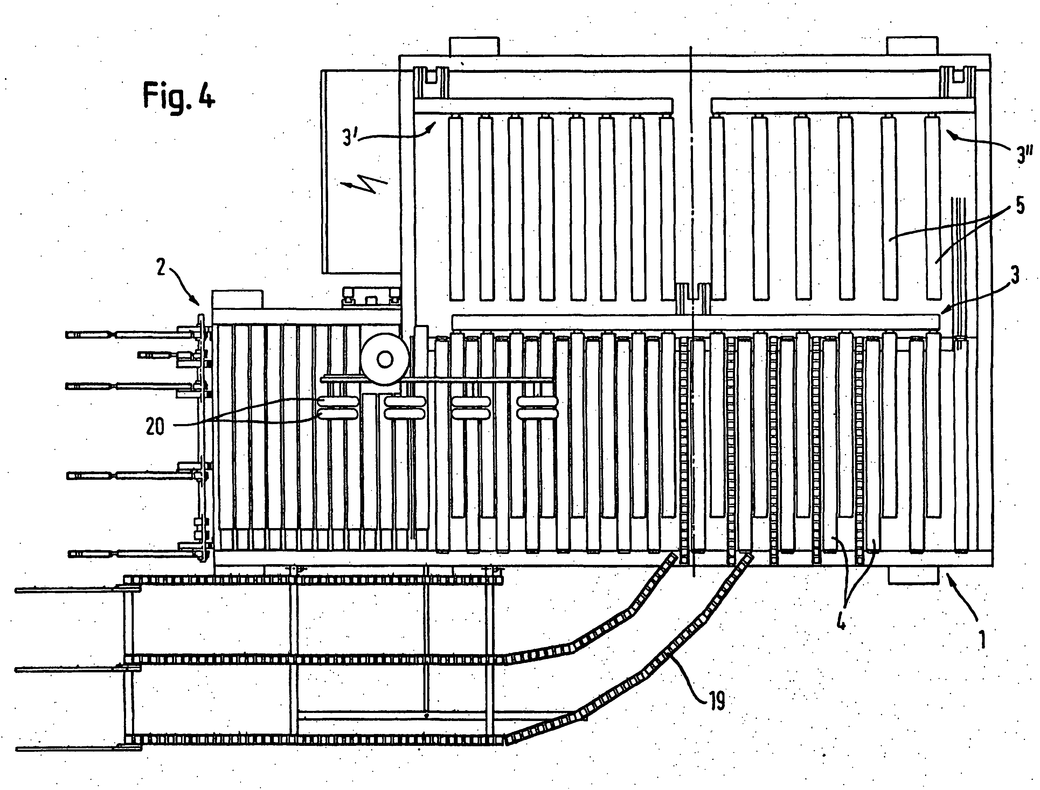

Fig. 4 zeigt eine schematische Draufsicht auf eine erfindungsgemäße Vorrichtung in der Ausführungsform mit zwei Hubtischen, von denen wiederum ein Hubtisch 3 einteilig ausgestaltet ist und der andere aus zwei Teilstücken 3', 3" besteht. Die Draufsicht lässt außerdem die Übernahmeeinrichtung 1 mit ihren Transportwalzen 4 erkennen, zwischen die die Transportwalzen 5 der Hubtische 3 bzw. 3', 3" hindurchführbar sind. In der dargestellten Position befindet sich gerade der einteilige Hubtisch im Bereich der Übernahmeeinrichtung 1 in einer Aufwärtsbewegung, während der zweiteilige Hubtisch 3', 3" sich im hinteren Bereich der Vorrichtung befindet und abwärts geführt wird. Fig. 4 lässt außerdem erkennen, dass die Hubtische so geführt sind, dass sie sich in ihren waagerechten Bewegungen bezüglich einander nicht behindern.

Vor der Übernahmeeinrichtung 1 befindet sich eine Rollenbahn 19, die ein von einer Bearbeitungseinheit her kommende Werkstück um 90° dreht, so dass es in gedrehtem Zustand von dem Hubtisch angehoben und dann zurückgeführt wird. An der Beschickungsseite kann das Werkstück dann sofort wieder in die Bearbeitungseinheit eingelegt werden, ohne dass es noch gedreht werden müsste, um eine weitere Kante des Werkstücks zu bearbeiten. Bezugsziffer 20 bezeichnet einen Oberdruck, bei dem mindestens eine Rolle angetrieben ist und der zum Befördern der Werkstücke von dem Hubtisch 3, 3', 3" auf die Rücklaufeinrichtung 2 dient.

Die Fig. 5 a und b zeigen noch einmal zwei Hubtische 3 bzw. 3', 3" einer erfindungsgemäßen Vorrichtung mit ihren Führungen, und die möglichen Relativbewegungen der beiden Hubtische werden noch einmal deutlich: unabhängig davon, ob sich der einteilige Hubtisch 3 in der oberen Stellung befindet (Fig. 5a) oder der zweiteilige Hubtisch 3', 3" (Fig. 5b), ist eine waagerechte Bewegung (senkrecht zur Zeichenebene in Fig. 5) der beiden Hubtische 3, 3', 3" relativ zueinander möglich.

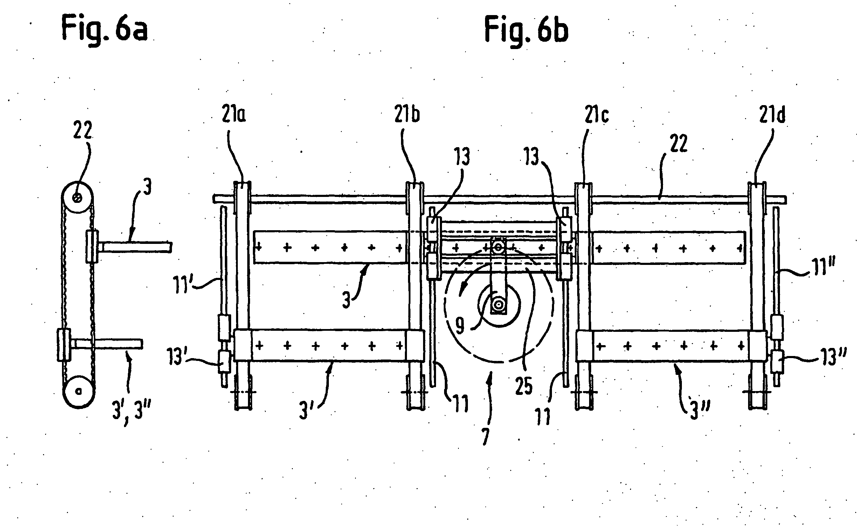

Fig. 6 zeigt einen ersten Kurbeltrieb 7 einer erfindungsgemäßen Vorrichtung, der eine Auf- und Ab-Bewegung von zwei Hubtischen 3 bzw. 3', 3" erzeugt. (Fig. 6 entspricht einer Ansicht des Kurbeltriebs 7 aus der Richtung A in Fig. 1b, zeigt jedoch eine Ausführungsform mit zwei Hubtischen.)

Die Schlitten 13 des ersten Hubtisches 3, die mittels Führungsschienen 11 geführt sind, sind mit Zahnriemen 21b, 21c verklemmt. Die Zahnriemen 21b, 21c sind über eine Gleichlaufwelle 22 mit weiteren Zahnriemen 21a, 21d gekoppelt, an denen Schlitten 13', 13" für die beiden Teilstücke 3', 3" des zweiten Hubtisches verklemmt sind. Auf diese Weise überträgt sich die durch den Kurbeltrieb 7 erzeugte Auf- und Ab-Bewegung der Fahrschiene 25 auf die Schlitten 13 des ersten Hubtisches 3, auf die Zahnriemen 21b, 21c, auf die Gleichlaufwelle 22 und über die Zahnriemen 21a, 21d auf die Schlitten 13', 13" des zweiten Hubtisches 3', 3". Die Schlitten 13 sind dabei um eine halbe Umfangslänge der Zahnriemen gegenüber den Schlitten 13', 13" versetzt an den jeweiligen Zahnriemen verklemmt (vgl. Fig. 6a), so dass sich jeweils ein Hubtisch 3, 3', 3" aufwärts bewegt, während sich der andere abwärts bewegt.

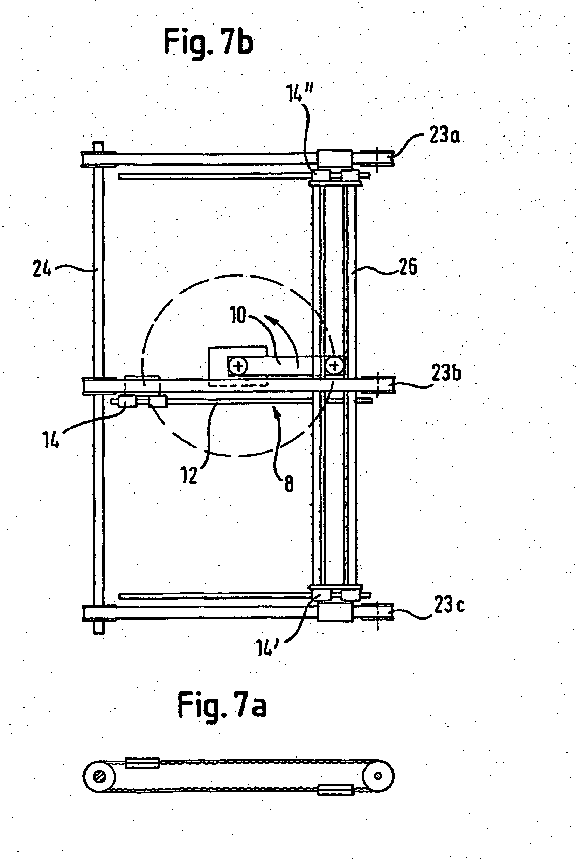

Fig. 7 zeigt einen zweiten Kurbeltrieb 8 zur Erzeugung der waagerechten Bewegung der beiden Hubtische. Ähnlich wie beim ersten Kurbeltrieb 7 ist ein Schlitten 14 des ersten Hubtisches 3 mit einem Zahnriemen 23b verklemmt und läuft an einer Führungsschiene 12 ab. Schlitten 14', 14" des zweiteiligen Hubtisches 3', 3" sind mit Zahnriemen 23a, 23c verklemmt, und die drei Zahnriemen sind über eine Gleichlaufwelle 24 gekoppelt. Die beiden Schlitten 14', 14" des zweiteiligen Hubtisches sind dabei mit einer Fahrschiene 26 verbunden, die durch den Kurbeltrieb 8 angetrieben wird, und deren Bewegung überträgt sich über die Zahnriemen 23a, 23c und die Gleichlaufwelle 24 auf den Zahnriemen 23b und somit auf den Schlitten 14 des einteiligen Hubtisches 3. Die Hubtische selbst sind in Fig. 7 nicht dargestellt.

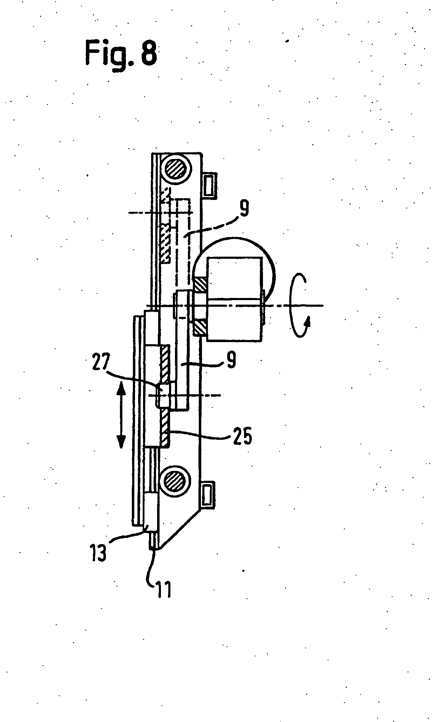

Fig. 8 zeigt schließlich eine Detailansicht eines Kurbeltriebs einer erfindungsgemäßen Vorrichtung. Zwei Stellungen einer Kurbel 9 sind dargestellt sowie die Fahrschiene 25, der Schlitten 13 und die Führungsschiene 11. Das freie Ende der Kurbel 9 trägt eine Rolle 27.

## Patentansprüche

1. Vorrichtung zur Rückführung von bearbeiteten Werkstücken von der Ausgabeseite einer ersten Bearbeitungseinheit zu der Beschickungsseite der ersten oder einer weiteren Bearbeitungseinheit, wobei die Vorrichtung folgendes aufweist:
- eine Übernahmeeinrichtung (1) zur Übernahme der bearbeiteten Werkstücke an der Ausgabeseite der ersten Bearbeitungseinheit,
- eine Hubeinrichtung zum Anheben der von der Übernahmeeinheit angelieferten Werkstücke in eine oberhalb der Übernahmeeinheit liegende Rückführposition, und
- eine Rücklaufeinrichtung (2) zum Transportieren der von der Hubeinrichtung angelieferten Werkstücke zurück zur Beschickungsseite der ersten oder der weiteren Bearbeitungseinheit,
wobei die Übernahmeeinrichtung (1) einen Übernahmetisch mit voneinander beabstandeten ersten Auflageelementen (4) für die Werkstücke aufweist und die Hubeinrichtung eine Hubtischanordnung (3) aufweist, welche voneinander beabstandete zweite Auflageelemente (5) aufweist, welche zwischen den ersten Auflageelementen (4) des Übernahmetisches aufwärts hindurchführbar sind, und
wobei die Hubeinrichtung zumindest eine Antriebseinheit (7, 8) aufweist, die die Hubtischanordnung (3) in einer Umlaufbewegung von dem Übernahmetisch aufwärts zu der Rückführposition und zurück zum Übernahmetisch bewegt,
**dadurch gekennzeichnet,**
**dass** die Hubtischanordnung zwei Hubtische (3; 3', 3") umfasst, die eine zumindest zweidimensionale, zyklische Bewegung zwischen Übernahmetisch und Rückführposition gleichzeitig ausführen wobei die Bewegungen miteinander synchronisiert sind,
**dass** ein erster Hubtisch (3) einteilig und ein zweiter (3', 3") zweiteilig ausgeführt ist, und
**dass** die Mittel zur Kopplung des einteiligen Hubtisches (3) mit den Antriebseinheiten (7, 8) auf halber Länge des einteiligen Hubtisches (3) und die Mittel zur Kopplung der beiden Teilstücke (3', 3") des zweiteiligen Hubtisches mit den Antriebseinheiten (7, 8) außen an diesen beiden Teilstücken (3', 3") vorgesehen sind.

2. Vorrichtung nach Anspruch 1, **dadurch gekennzeichnet, dass** der Hubtisch (3; 3', 3") eine oszillierende Auf- und Abbewegung und eine im wesentlichen waagerechte oszillierende Bewegung ausführt.

3. Vorrichtung nach Anspruch 1 oder 2, **dadurch gekennzeichnet, dass** die Umlaufbewegung des Hubtisches (3; 3', 3") eine zweidimensionale Bewegung in einer Ebene senkrecht zur Förderrichtung des Werkstücks ist.

4. Vorrichtung nach einem der vorangehenden Ansprüche, **dadurch gekennzeichnet, dass** der Übernahmetisch ein feststehender Übernahmetisch ist.

5. Vorrichtung nach einem der vorangehenden Ansprüche, **dadurch gekennzeichnet, dass** die Hubeinrichtung eine erste Antriebseinheit (7) zur Erzeugung der Auf- und Abbewegung des zumindest einen Hubtisches (3; 3', 3") aufweist.

6. Vorrichtung nach einem der vorangehenden Ansprüche, **dadurch gekennzeichnet, dass** die Hubeinrichtung eine zweite Antriebseinheit (8) zur Erzeugung einer im wesentlichen waagerechten Bewegung des Hubtisches (3; 3', 3") aufweist.

7. Vorrichtung nach einem der vorangehenden Ansprüche, **dadurch gekennzeichnet, dass** zumindest eine der Antriebseinheiten (7, 8) einen Kurbeltrieb aufweist.

8. Vorrichtung nach Anspruch 7, **dadurch gekennzeichnet, dass** jeder Kurbeltrieb eine angetriebene Drehachse aufweist, an der eine Kurbel (9, 10) angebracht ist.

9. Vorrichtung nach Anspruch 8, **dadurch gekennzeichnet, dass** eine Fahrschiene () vorgesehen ist, in der das freie Ende der Kurbel (9, 10) geführt ist und die mit zumindest einem Hubtisch (3; 3', 3") gekoppelt ist, so dass sich ihre oszillierende Bewegung auf den zumindest einen Hubtisch (3; 3', 3") überträgt.

10. Vorrichtung nach Anspruch 9, **dadurch gekennzeichnet, dass** die Fahrschiene gehärtete Leisten zur Aufnahme des freien Endes der Kurbel (9, 10) aufweist, welche insbesondere eingeklebt sind.

11. Vorrichtung nach einem der Ansprüche 8 bis 10, **dadurch gekennzeichnet, dass** das freie Ende der Kurbel (9, 10) eine Rolle (27) trägt, die in Längsrichtung der Fahrschiene verfahrbar ist.

12. Vorrichtung nach einem der vorangehenden Ansprüche, **dadurch gekennzeichnet, dass** alle vorhandenen Antriebseinheiten (7, 8) miteinander synchronisiert sind.

13. Vorrichtung nach einem der vorangehenden Ansprüche, **dadurch gekennzeichnet, dass** eine übergeordnete Steuerung zur Ansteuerung der Antriebseinheiten (7, 8) vorgesehen ist.

14. Vorrichtung nach Anspruch 13, **dadurch gekennzeichnet, dass** der Übernahmetisch mit einem Sensor versehen ist, der ein Signal an die übergeordnete Steuerung übermittelt, wenn sich ein Werkstück auf dem Übernahmetisch befindet.

15. Vorrichtung nach Anspruch 13 oder 14, **dadurch gekennzeichnet, dass** zumindest ein Endlagensensor vorgesehen ist, der ein Signal an die übergeordnete Steuerung übermittelt, wenn ein Hubtisch (3; 3', 3") eine bestimmte Position in seiner Umlaufbewegung erreicht.

16. Vorrichtung nach Anspruch 15, **dadurch gekennzeichnet, dass** vier Endlagensensoren vorgesehen sind, von denen der erste nach Vollendung einer Aufwärtsbewegung eines Hubtisches (3; 3', 3"), der zweite nach Vollendung einer waagerechten Rückwärtsbewegung, der dritte nach Vollendung einer Abwärtsbewegung und der vierte nach Vollendung einer waagerechten Vorwärtsbewegung ein Signal an die übergeordnete Steuerung übermittelt.

17. Vorrichtung nach einem der vorangehenden Ansprüche, **dadurch gekennzeichnet, dass** Mittel (13, 14, 15, 16, 17, 18) zur Kopplung jedes Hubtisches (3; 3', 3") mit jeder vorhandenen Antriebseinheit (7, 8) vorgesehen sind.

18. Vorrichtung nach Anspruch 17, **dadurch gekennzeichnet, dass** als Kopplungsmittel für jeden vorhandenen Hubtisch (3; 3', 3") für jede vorhandene Antriebseinheit (7, 8) zumindest ein Schlitten (13, 14) vorgesehen ist, der mittels der entsprechenden Antriebseinheit (7, 8) bewegbar und mit dem zugehörigen Hubtisch (3; 3', 3") verbunden ist.

19. Vorrichtung nach Anspruch 18, **dadurch gekennzeichnet, dass** jeder Schlitten (13, 14) in seiner Bewegung mittels zumindest einer Führungsschiene (11, 12) geführt ist.

20. Vorrichtung nach Anspruch 18 oder 19, **dadurch gekennzeichnet, dass** jeder Schlitten (13, 14) zumindest einen Mitnehmer (16, 18) aufweist, an dem der zugehörige Hubtisch (3; 3', 3") mit einem Bewegungsfreiheitsgrad gelagert ist.

21. Vorrichtung nach Anspruch 20, **dadurch gekennzeichnet, dass** zumindest ein Mitnehmer (16) als Stange ausgebildet ist und dass der zumindest eine Hubtisch (3; 3', 3") Rollen (15) aufweist, über die er an dem Mitnehmer (16) gelagert ist.

22. Vorrichtung nach Anspruch 20 oder 21, **dadurch gekennzeichnet, dass** zumindest ein Mitnehmer (18) als Schiene ausgebildet ist und dass der zumindest eine Hubtisch (3; 3', 3") ein Führungselement (17) aufweist, über das er an der Schiene (18) gelagert ist.

23. Vorrichtung nach einem der Ansprüche 9 bis 22, **dadurch gekennzeichnet, dass** zumindest ein Schlitten (13, 14) mit einer Fahrschiene (25, 26) eines Kurbeltriebs (7, 8) gekoppelt ist.

24. Vorrichtung nach Anspruch 1, **dadurch gekennzeichnet, dass** die beiden Hubtische (3; 3', 3") in ihren Bewegungen um einen halben Zyklus voneinander beabstandet sind, so dass während einer Aufwärtsbewegung des einen Hubtisches (3; 3', 3") stets eine Abwärtsbewegung des anderen Hubtisches (3; 3', 3") stattfindet.

25. Vorrichtung nach einem der Ansprüche 18 bis 24, **dadurch gekennzeichnet, dass** die Schlitten (13, 14) einer Antriebseinheit (7, 8) miteinander synchronisiert sind, indem jeder Schlitten (13, 14) einer Antriebseinheit (7, 8) mit jeweils einem Zahnriemen (21, 23) verklemmt ist und alle Zahnriemen (21, 23) einer Antriebseinheit (7, 8) über eine Gleichlaufwelle (22, 24) miteinander gekoppelt sind.

26. Vorrichtung nach Anspruch 25, **dadurch gekennzeichnet, dass** in jeder Antriebseinheit (7, 8) die Verklemmung des zumindest einen Schlittens (13, 14) des ersten Hubtisches (3; 3', 3") mit dem Zahnriemen (21, 23) um eine halbe Umfangslänge der Zahnriemen (21, 23) gegen die Klemmung des zumindest einen Schlittens (13, 14) des zweiten Hubtisches (3; 3', 3") versetzt ist, so dass während einer Aufwärtsbewegung des einen Hubtisches (3; 3', 3") stets eine Abwärtsbewegung des anderen Hubtisches (3; 3', 3") stattfindet und während einer waagerechten Vorwärtsbewegung eines Hubtisches (3; 3', 3") stets eine waagerechte Zurückbewegung des anderen (3; 3', 3").

27. Vorrichtung nach einem der vorangehenden Ansprüche, **dadurch gekennzeichnet, dass** die Auflageelemente (5) des Hubtisches (3; 3', 3") drehbare Transportrollen aufweisen, deren Drehachsen im wesentlichen senkrecht zur Transportrichtung des Werkstücks liegen.

28. Vorrichtung nach einem der vorangehenden Ansprüche, **dadurch gekennzeichnet, dass** die Auflageelemente (4) des Übernahmetisches drehbare Transportrollen aufweisen, deren Drehachsen im wesentlichen senkrecht zur Transportrichtung des Werkstücks liegen.

29. Vorrichtung nach Anspruch 28 oder 29, **dadurch gekennzeichnet, dass** die Transportrollen angetrieben sind.

## Claims

1. Device for returning machined workpieces from the output end of a first machining unit to the feed end of the first or another machining unit, wherein the device comprises the following:
- a take-over device (1) for taking over the machined workpieces at the output end of the first machining unit;
- a lifting device for lifting the workpieces delivered by the take-over unit into a return position located above the take-over unit; and
- a return flow device (2) for transporting the workpieces delivered by the lifting device back to the feed end of the first or the other machining unit,
wherein the take-over device (1) possesses a take-over bench having first support elements (4) spaced from one another for the workpieces and the lifting device comprises a lifting platform arrangement (3) having second support elements (5) spaced from one another which are movable upwards between the first support elements (4) of the take-over bench and
wherein the lifting device has at least one drive unit (7, 8) which moves the lifting platform arrangement (3) in a circulating movement from the take-over bench upwards to the return position and back to the take-over bench,
**characterised in that**
the lifting platform arrangement comprises two lifting platforms (3; 3', 3") which simultaneously execute an at least two-dimensional, cyclical movement between the take-over bench and return position, wherein the movements are synchronised with one another,
that a first lifting platform (3) is constructed in one part and a second (3', 3") in two parts and
that the means coupling the one-part lifting platform (3) to the drive units (7, 8) are provided half way along the one-part lifting platform (3) and the means for coupling the two sections (3', 3") of the two-part lifting platform to the drive units (7, 8) are provided outside on these two sections (3', 3").

2. Device according to claim 1, **characterised in that** the lifting platform (3; 3', 3") executes an oscillating up and down movement and a substantially horizontal oscillating movement.

3. Device according to claim 1 or 2, **characterised in that** the circulating movement of the lifting platform (3; 3', 3") is a two-dimensional movement in a plane perpendicular to the transport direction of the workpiece.

4. Device according to one of the preceding claims, **characterised in that** the take-over bench is a fixed take-over bench.

5. Device according to one of the preceding claims, **characterised in that** the lifting device possesses a first drive unit (7) for producing the up and down movement of the at least single lifting platform (3; 3', 3").

6. Device according to one of the preceding claims, **characterised in that** the lifting device possesses a second drive unit (8) for producing a substantially horizontal movement of the lifting platform (3; 3', 3").

7. Device according to one of the preceding claims, **characterised in that** at least one of the drive units (7, 8) possesses a crank gear.

8. Device according to claim 7, **characterised in that** each crank gear possesses a driven turning axle to which a crank (9, 10) is fitted.

9. Device according to claim 8, **characterised in that** a running rail () is provided in which the free end of the crank (9, 10) is guided and which is coupled to at least one lifting platform (3; 3', 3") so that its oscillating movement is transmitted to the at least single lifting platform (3; 3', 3").

10. Device according to claim 9, **characterised in that** the running rail has hardened borders for receiving the free end of the crank (9, 10) which in particular are glued into place.

11. Device according to one of claims 8 to 10, **characterised in that** the free end of the crank (9, 10) carries a roller (27) which is movable in the longitudinal direction of the running rail.

12. Device according to one of the preceding claims, **characterised in that** all drive units (7, 8) present are synchronised with one another.

13. Device according to one of the preceding claims, **characterised in that** a higher-order control system is provided for controlling the drive units (7, 8).

14. Device according to claim 13, **characterised in that** the take-over bench is provided with a sensor which transmits a signal to the higher-order control system which a workpiece is located on the take-over bench.

15. Device according to claim 13 or 14, **characterised in that** at least one end position sensor is provided which transmits a signal to the higher-order control system when a lifting platform (3; 3', 3") reaches a certain position in its circulating movement.

16. Device according to claim 15, **characterised in that** four end position sensors are provided of which the first transmits a signal to the higher-order control system on completion of an upwards movement of a lifting platform (3; 3', 3"), the second on completion of a horizontal rearwards movement, the third on completion of a downwards movement and the fourth on completion of a horizontal forwards movement.

17. Device according to one of the preceding claims, **characterised in that** means (13, 14, 15, 16, 17, 18) are provided for coupling each lifting platform (3; 3', 3") to each existing drive unit (7, 8).

18. Device according to claim 17, **characterised in that** for the coupling means for each existing lifting platform (3; 3', 3") and for each existing drive unit (7, 8) at least one moving carriage (13, 14) is provided which is movable by means of the corresponding drive unit (7, 8) and is connected to the associated lifting platform (3; 3', 3").

19. Device according to claim 18, **characterised in that** each moving carriage (13, 14) is guided in its movement by means of at least one guide rail (11, 12).

20. Device according to claim 18 or 19, **characterised in that** each moving carriage (13, 14) possesses at least one carrier piece (16, 18) on which the associated lifting platform (3; 3', 3") is mounted with a degree of freedom of movement.

21. Device according to claim 20, **characterised in that** at least one carrier piece (16) is constructed in the form of a bar and that the at least single lifting platform (3; 3', 3") possesses rollers through which it is mounted on the carrier piece (16).

22. Device according to claim 20 or 21, **characterised in that** at least one carrier piece (18) is constructed as a rail and that the at least single lifting platform (3; 3', 3") possesses a guide element (17) through which it is mounted on the rail (18).

23. Device according to one of claims 9 to 22, **characterised in that** at least one moving carriage (13, 14) is coupled to a running rail (25, 26) of a crank gear (7, 8).

24. Device according to claim 1, **characterised in that** the two lifting platforms (3; 3', 3") are spaced from one another in their movements by a half cycle so that during an upwards movement of one lifting platform (3; 3', 3") a downwards movement of the other lifting platform (3; 3', 3") always takes place.

25. Device according to one of claims 18 to 24, **characterised in that** the moving carriages (13, 14) of a drive unit (7, 8) are synchronised with one another **in that** each moving carriage (13, 14) of a drive unit (7, 8) is jammed in each case to a toothed belt and all toothed belts (21, 23) of a drive unit (7, 8) are coupled to one another through a synchronising shaft (22, 24).

26. Device according to one of claim 25 to 24, **characterised in that** in each drive unit (7, 8) the jamming of the at least single moving carriage (13, 14) of the first lifting platform (3; 3', 3") with the toothed belt (21, 23) is offset by half the circumferential length of the toothed belt (21, 23) to the jamming of the at least single moving carriage (13, 14) of the second lifting platform (3; 3', 3") so that during an upwards movement of one lifting platform (3; 3', 3") a downwards movement of the other lifting platform (3; 3', 3") always takes place and during a horizontal forwards movement of one lifting platform (3; 3', 3") always a horizontal backwards movement of the other (3; 3', 3").

27. Device according to one of the preceding claims, **characterised in that** the support elements (5) of the lifting platform (3; 3', 3") have rotatable transport rollers whose axes of rotation are located substantially perpendicular to the transport direction of the workpiece.

28. Device according to one of the preceding claims, **characterised in that** the support elements (4) of the take-over bench have rotatable transport rollers whose axes of rotation are located substantially perpendicular to the transport direction of the workpiece.

29. Device according to claim 28 or 29, **characterised in that** the transport rollers are driven.

## Revendications

1. Dispositif pour ramener des pièces d'oeuvre usinées du côté distribution d'une première unité d'usinage au côté chargement de la première ou d'une autre unité d'usinage, le dispositif présentant les éléments ci-après :
- un dispositif de prise en charge (1), pour transférer les pièces d'oeuvre usinées au côté distribution de la première unité d'usinage,
- un dispositif de levage pour lever les pièces d'oeuvre usinées livrées par l'unité de prise en charge, en une position de retour située au-dessus de l'unité de prise en charge, et
- un dispositif de retour (2), pour transporter les pièces d'oeuvre livrées par le dispositif de levage en les retournant au côté chargement de la première ou de l'autre unité d'usinage,
le dispositif de prise en charge (1) présentant une table de prise en charge comprenant des premiers éléments de pose (4) espacés les uns des autres pour les pièces d'oeuvre, et le dispositif de levage présentant un agencement de table de levage (3), présentant des deuxièmes éléments de pose (5) espacés les uns des autres et susceptibles d'être guidés en un mouvement ascendant, entre les premiers éléments de pose (4) de la table de prise en charge, et
le dispositif de levage présentant au moins une unité d'entraînement (7, 8), déplaçant l'agencement de table de levage (1) en un mouvement circulatoire en montant de la table de prise en charge et en allant à la position de retour, et retour à la table de prise en charge
**caractérisé en ce que**,
l'agencement de la table de levage comprend deux tables (3; 3', 3"), accomplissant en même temps un mouvement cyclique, au moins bidimensionnel, entre la table de prise en charge et la position de retour, les mouvements étant synchronisés entre eux,
**en ce qu'**une première table de levage (3) est réalisée en une partie et une deuxième table (3', 3") est réalisée en deux parties, et
**en ce que** les moyens sont prévus pour assurer l'accouplement de la table de levage (3), réalisée en une partie, avec les unités d'entraînement (7, 8), à mi-longueur de la table de levage (3) réalisée en une partie, et les moyens sont prévus pour assurer l'accouplement des deux éléments partiels (3', 3") de la table de levage, réalisée en deux parties, avec les unités d'entraînement (7, 8), extérieurement sur ces deux éléments partiels (3', 3").

2. Dispositif selon la revendication 1, **caractérisé en ce que** la table de levage (3; 3', 3") accomplit un mouvement de lever et dé descente oscillant et un mouvement oscillant sensiblement horizontal.

3. Dispositif selon la revendication 1 ou 2, **caractérisé en ce que** le mouvement circulatoire de la table de levage (3; 3', 3") est un mouvement bidimensionnel dans un plan perpendiculaire à la direction de transport de la pièce d'oeuvre.

4. Dispositif selon l'une des revendications précédentes, **caractérisé en ce que** la table de prise en charge est une table de prise en charge stationnaire.

5. Dispositif selon l'une des revendications précédentes, **caractérisé en ce que** le dispositif de levage présente une première unité d'entraînement (7), pour produire le mouvement, ascendant et descendant, de la au moins une table de levage (3; 3', 3").

6. Dispositif selon l'une des revendications précédentes, **caractérisé en ce que** le dispositif de levage présente une deuxième unité d'entraînement (8), pour produire un mouvement, sensiblement horizontal, de la table de levage (3; 3', 3").

7. Dispositif selon l'une des revendications précédentes, **caractérisé en ce qu'**au moins l'une des unités d'entraînement (7, 8) présente une transmission à manivelle.

8. Dispositif selon la revendication 7, **caractérisé en ce que** chaque transmission à manivelle présente un axe de rotation entraîné, sur lequel est montée une manivelle (9, 10).

9. Dispositif selon la revendication 8, **caractérisé en ce qu'**une glissière de déplacement est prévue, dans laquelle l'extrémité libre de la manivelle (9, 10) est guidée et qui est couplée à au moins une table de levage (3; 3', 3"), de manière que son mouvement oscillant se transmette à la au moins une table de levage (3; 3', 3").

10. Dispositif selon la revendication 9, **caractérisé en ce que** la glissière de déplacement présente, pour supporter l'extrémité libre de la manivelle (9, 10), des bandes durcies, qui en particulier sont collées.

11. Dispositif selon l'une des revendications 8 à 10, **caractérisé en ce que** l'extrémité libre de la manivelle (9, 10) porte un galet (27) déplaçable dans la direction longitudinale de la glissière de déplacement.

12. Dispositif selon l'une des revendications précédentes, **caractérisé en ce que** toutes les unités d'entraînement (7, 8) existantes sont synchronisées entre elles.

13. Dispositif selon l'une des revendications précédentes, **caractérisé en ce qu'**une commande hiérarchiquement supérieure est prévue pour commander les unités d'entraînement (7, 8).

14. Dispositif selon la revendication 13, **caractérisé en ce que** la table de prise en charge est munie d'un capteur, transmettant un signal à la commande hiérarchiquement supérieure, lorsque qu'une pièce d'oeuvre se trouve sur la table de prise en charge.

15. Dispositif selon la revendication 13 ou 14, **caractérisé en ce qu'**au moins un capteur de fin de course est prévu, transmettant un signal à la commande hiérarchiquement supérieure lorsqu'une table de levage (3; 3', 3") atteint une position déterminée dans son mouvement circulatoire.

16. Dispositif selon la revendication 15, **caractérisé en ce que** quatre capteurs de fin de course sont prévus, dont le premier, après accomplissement complet d'un mouvement ascendant d'une table de levage (3; 3', 3"), le deuxième, après accomplissement complet d'un mouvement de retour horizontal, le troisième, après accomplissement complet d'un déplacement ascendant, et le quatrième, après accomplissement complet d'un déplacement d'avancement horizontal, transmet un signal à la commande hiérarchiquement supérieure.

17. Dispositif selon l'une des revendications précédentes, **caractérisé en ce que** des moyens (13, 14, 15, 16, 17, 18) sont prévus pour l'accouplement de chaque table de levage (3; 3', 3") à chaque unité d'entraînement (7, 8) existante.

18. Dispositif selon la revendication 17, **caractérisé en ce qu'**en tant que moyens d'accouplement pour chaque table de levage (3; 3', 3") existante, pour chaque unité d'entraînement (7, 8) existante, est prévu au moins un chariot (13, 14), déplaçable par l'unité d'entraînement (7, 8) correspondante et reliée à la table de levage (3; 3', 3") afférente.

19. Dispositif selon la revendication 18, **caractérisé en ce que** chaque chariot (13, 14) est guidé dans son déplacement à l'aide d'au moins une glissière de guidage (11, 12).

20. Dispositif selon la revendication 18 ou 19, **caractérisé en ce que** chaque chariot (13, 14) présente au moins un organe d'amenée (16, 18) sur lequel la table de levage (3; 3', 3") afférente est montée, avec un degré de liberté de mouvement.

21. Dispositif selon la revendication 20, **caractérisé en ce qu'**au moins un organe d'amenée (16) est réalisé sous la forme de barres, et **en ce que** la au moins une table de levage (3; 3', 3") présente des galets (15), par l'intermédiaire desquels elle est montée sur l'organe d'amenée (16).

22. Dispositif selon la revendication 20 ou 21, **caractérisé en ce qu'**au moins un organe d'amenée (18) est réalisé sous la forme de glissière ou rail, et **en ce que** la au moins une table de levage (3; 3', 3") présente un élément de guidage (17), par l'intermédiaire duquel elle est montée sur le rail ou glissière (18).

23. Dispositif selon l'une des revendications 9 à 22, **caractérisé en ce qu'**au moins un chariot (13, 14) est couplé à une glissière de déplacement (25, 26) d'une transmission à manivelle (7, 8).

24. Dispositif selon la revendication 1, **caractérisé en ce que** les deux tables de levage (3; 3', 3"), lors de leurs déplacements, sont espacées d'un demi-cycle l'un de l'autre de manière que, pendant un déplacement ascendant d'une première table de levage (3; 3', 3"), se produise toujours un déplacement descendant de l'autre table de levage (3; 3', 3").

25. Dispositif selon l'une des revendications 18 à 24, **caractérisé en ce que** les chariots (13, 14) d'une unité d'entraînement (7, 8) sont synchronisés entre eux, **en ce que** chaque chariot (13, 14) d'une unité d'entraînement (7, 8) est relié par serrage à au moins une courroie dentée (21, 23), et toutes les courroies dentées (21, 23) d'une unité d'entraînement (7, 8) sont couplées ensemble, par l'intermédiaire d'un arbre de synchronisation (22, 24).

26. Dispositif selon la revendication 25, **caractérisé en ce que**, dans chaque unité d'entraînement (7, 8), le serrage d'au moins un chariot (13, 14) de la première table de levage (3; 3', 3") avec la courroie dentée (21, 23) est décalé d'une demi-circonférence des courroies dentées (21, 23) par rapport au serrage d'au moins un chariot (13, 14) de la deuxième table de levage (3; 3', 3"), de manière que, pendant un mouvement ascendant d'une première table de levage (3; 3', 3"), se produise toujours un mouvement descendant de l'autre table de levage (3; 3', 3") et que, pendant un déplacement d'avancement horizontal d'une table de levage (3; 3', 3"), se produise toujours un déplacement de retour horizontal de l'autre table de levage (3; 3', 3").

27. Dispositif selon l'une des revendications précédentes, **caractérisé en ce que** les éléments de pose (5) de la table de levage (3; 3', 3") présente des galets de transport susceptibles de tourner, dont les axes de rotation sont sensiblement perpendiculaires à la direction de transport de la pièce d'oeuvre.

28. Dispositif selon l'une des revendications précédentes, **caractérisé en ce que** les éléments de pose (4) de la table de prise en charge présentent des galets de transport susceptibles de tourner, dont les axes de rotation sont sensiblement perpendiculaires à la direction de transport de la pièce d'oeuvre.

29. Dispositif selon la revendication 28 ou 29, **caractérisé en ce que** les galets de transport sont entraînés.
